# EUROPÄISCHE PATENTANMELDUNG

(11) **EP 4 761 024 A2**
(43) Veröffentlichungstag der Anmeldung: **17.06.2026**
(21) Anmeldenummer: 25220377.3
(22) Anmeldetag: 03.12.2025
(51) Int. Cl.: H02G 1/12, B25B 7/22

(54) **HANDBETÄTIGBARES ABISOLIERWERKZEUG**

(30) Priorität: 11.12.2024 DE 102024137272
(71) Anmelder: Weidmüller Interface GmbH & Co. KG, 32758 Detmold (DE)
(72) Erfinder: BRÖKER, Thilo, 32758 Detmold (DE); ARENS, Tobias, 34434 Borgentreich (DE)
(74) Vertreter: Kleine, Hubertus

(57) **Zusammenfassung**

Ein handbetätigbares Abisolierwerkzeug (1), insbesondere zur Verarbeitung von Kabeln, weist eine erste Baueinheit (11), umfassend einen ersten Handgriff (2) mit einer sich von diesem erstreckenden ersten Klemmbacke (4), eine zweite Baueinheit (12), umfassend einen relativ zu dem ersten Handgriff (2) abspreizbar um eine Schwenkachse (AP) schwenkbar bewegbaren zweiten Handgriff (3) mit einer sich von diesem erstreckenden zweiten Klemmbacke (5), und eine zwischen den Klemmbacken (4, 5) angeordnete Abisoliereinheit (7), umfassend zwei Klemm- und Schneideinheiten (71, 72) und in Aufnahmen (41, 51) der jeweiligen Klemmbacke (4, 5) lösbar festlegbaren Kopfteilen (77), auf, wobei die zwischen der Klemmbacke (4, 5) und dem Handgriff (2, 3) der ersten und zweiten Baueinheit (11, 12) jeweils Drehlagerabschnitte (6a, 6b, 8a, 8b) eines Drehlagers (6, 8) angeformt sind, wobei die Drehlagerabschnitte 6a, 6b, 8a, 8b) um die Schwenkachse (AP) schwenkbar miteinander verrastet sind, und die Abisoliereinheit (7) als dritte Baueinheit ausgebildet ist, wobei die Klemm- und Schneideinheiten (71, 72) der Abisoliereinheit (7) über wenigstens einen Führungsbolzen (78) fest miteinander verbunden sind.

## Beschreibung

Die vorliegende Erfindung betrifft ein handbetätigbares Abisolierwerkzeug gemäß dem Oberbegriff des Anspruchs 1.

Gattungsgemäße Abisolierwerkzeuge sind beispielsweise aus der WO 2023/088696 A1 oder der EP 2081266 B1 bekannt. Solche Abisolierzangen bestehen im Wesentlichen aus zwei Handgriffen und über diese betätigbare Klemmbacken. Zwischen den Klemmbacken ist eine Abisoliereinheit angeordnet, mit der der Mantel eines Kabels durch Einschneiden in den Mantel und anschließendes Abziehen des Mantels von dem Leiterdraht abisolierbar ist.

Um Kabel mit unterschiedlich dicken Isolierungen bzw. unterschiedlich dicken Leiterdrähten abisolieren zu können, ist es erforderlich, entweder die Abisoliereinheit auf die erforderliche Schnitttiefe einstellen zu können oder die Abisoliereinheit austauschen zu können, wie es bei der oben genannten WO 2023/088696 A1 beschrieben ist.

Nachteilig an der dort beschriebenen Abisolierzange ist der erforderliche Aufwand zum Austausch der Einsätze von der jeweiligen Klemmbacke des Abisolierwerkzeugs.

Aufgabe der vorliegenden Erfindung ist es, ein handbetätigbares Abisolierwerkzeug bereitzustellen, mit dem in einfacher Weise ein Austausch der Abisoliereinheit durchführbar ist. Weitere Aufgabe der Erfindung ist es, den Aufbau eines solchen Abisolierwerkzeugs weiter zu vereinfachen.

Die gestellten Aufgaben werden durch ein handbetätigbares Abisolierwerkzeug mit den Merkmalen des Anspruchs 1 gelöst.

Das erfindungsgemäße handbetätigbare Abisolierwerkzeug, insbesondere zur Verarbeitung von Kabeln, weist eine erste Baueinheit auf, die einen ersten Handgriff mit einer sich von diesem erstreckenden ersten Klemmbacke umfasst, eine zweite Baueinheit, umfassend einen relativ zu dem ersten Handgriff abspreizbar um eine Schwenkachse schwenkbar bewegbaren zweiten Handgriff mit einer sich von diesem erstreckenden zweiten Klemmbacke sowie eine zwischen den Klemmbacken angeordnete Abisoliereinheit, umfassend zwei Klemm- und Schneideinheiten und in Aufnahmen der jeweiligen Klemmbacke lösbar festlegbaren Kopfteilen.

Zwischen der Klemmbacke und dem Handgriff der ersten und zweiten Baueinheit sind jeweils Drehlagerabschnitte eines Drehlagers angeformt. Die Drehlagerabschnitte sind dabei um die Schwenkachse schwenkbar miteinander verrastet.

Weiter ist die Abisoliereinheit als dritte Baueinheit ausgebildet, wobei die Klemm- und Schneideinheiten der Abisoliereinheit über wenigstens einen Führungsbolzen fest miteinander verbunden sind.

Ein solchermaßen ausgebildetes Abisolierwerkzeug zeichnet sich zum einen durch seinen einfachen Aufbau aufgrund des einfachen Zusammenbaus aus.

Durch die Ausbildung der Abisoliereinheit als Baueinheit ist zudem ein einfach durchzuführendes Austauschen der Abisoliereinheit ermöglicht.

Vorteilhafte Ausführungsvarianten der Erfindung sind Gegenstand der Unteransprüche.

Gemäß einer vorteilhaften Ausführungsvariante ist jede der Klemm- und Schneideinheiten relativ zum jeweiligen Kopfteil um eine parallel zu dem wenigstens einen Führungsbolzen ausgerichtete Drehachse verdrehbar.

Dadurch ist ein vielfältiger Einsatz des Abisolierwerkzeugs insbesondere in beengten Raumverhältnissen möglich, da die Abisoliereinheit durch die Verdreheinheit gegenüber den Klemmbacken und den Handgriffen äußerst variabel einsetzbar ist.

Zur einfachen Fixierung der Abisoliereinheit zwischen den Klemmbacken sind in die Aufnahmen begrenzenden Seitenwänden der jeweiligen Klemmbacken Öffnungen zur Aufnahme von am Kopfteil vorgesehenen Steckstücken vorgesehen.

Das Kopfteil ist damit drehfest in den Klemmbacken des Abisolierwerkzeugs fixiert, während die Schneid- und Klemmeinheiten relativ zum Kopfteil verdrehbar sind.

So weist gemäß einer bevorzugten Weiterbildung jede der Schneid- und Klemmeinheiten ein am Kopfteil um die Drehachse verdrehbar ausgebildetes Aufnahmegehäuse auf, an dem wenigstens ein Messerhalter gehalten ist.

Das Aufnahmegehäuse ist dabei in einer bevorzugten Weiterbildung als Scherensitz mit zwei Schwenkachsen ausgebildet, an denen über Kreuz Gestänge schwenkbar gehalten sind, an deren Enden zwei Messerhalter angeordnet sind. Die Messerhalter sind dabei bevorzugt an den Enden der Gestänge angeformt.

Nach einer weiteren bevorzugten Weiterbildung liegt an einer den Messerhaltern abgewandten Seite des Gestänges ein Druckfederelement an, das der Vorspannung der Messerhalter in eine maximal ausgefahrene Stellung dient.

Durch die Verfahrbarkeit der Messerhalter zwischen einer maximal ausgefahrenen und einer maximal eingefahrenen Stellung, ist bei der Aufnahme des abzuisolierenden Kabels eine frühzeitige Klemmung des Kabels ermöglicht.

Gemäß einer weiteren bevorzugten Ausführungsvariante weist jeder der Messerhalter eine Klemmfläche und eine Aufnahmenut zur Aufnahme eines Messers auf. Dabei ist es hinreichend, wenn einer der beiden Messerhalter einer jeweiligen Schneid- und Klemmeinheit mit einem Messer bestückt ist.

Von Vorteil ist auch hier die Gleichteiligkeit der eingesetzten Messerhalter, die bei Nichtbestückung mit einem Messer als Klemmflächen dienen.

Der wenigstens eine Führungsbolzen, der die Schneid- und Klemmeinheiten miteinander verbindet, ist bevorzugt als Hubsäule ausgebildet.

Nach einer ersten Ausführungsvariante weisen die Drehlagerabschnitte parallel zueinander ausgerichtete voneinander beabstandete Lagerbacken auf. Dabei sind die Lagerbacken des einen der Drehlagerabschnitte weiter voneinander beabstandet als die Lagerbacken des anderen der Drehlagerabschnitte.

Die Lagerbacken des einen der Drehlagerabschnitte umgreifen die Lagerbacken des anderen der Drehlagerabschnitte.

Dies ermöglicht ein einfaches Zusammenstecken der Drehlagerabschnitte ineinander.

Jeweilige aneinander liegende Lagerbacken sind dabei mittels eines jeweilige Rastdeckels um die Schwenkachse drehbar, aber in Richtung der Schwenkachse verrastet.

Die Rastdeckel ermöglichen eine zuverlässige Fixierung der beiden Drehlagerabschnitte.

Die Rastdeckel liegen nach einer bevorzugten Weiterbildung an den äußeren Lagerbacken an und weisen axial in Richtung der Schwenkachse vorstehende Rasthaken auf, die einen Rand einer jeweiligen kreisförmigen Ausnehmung des inneren Lagerbackens hintergreifen.

Gemäß einer alternativen Ausführungsvariante sind die erste Baueinheit und die zweite Baueinheit baugleich ausgebildet.

Durch die Verwendung von als Gleichteilen ausgebildeten ersten und zweiten Baueinheiten ist die Montage nochmals vereinfacht.

Gemäß einer weiteren bevorzugten Ausführungsvariante ist an jeden der Drehlagerabschnitte wenigstens ein Raststeg und wenigstens eine Raststegaufnahme angeformt, wobei im zusammengesetzten Zustand der Drehlagerabschnitte der wenigstens eine Raststeg der einen der Drehlagerabschnitte mit der wenigstens einen Raststegaufnahme der anderen der Drehlagerabschnitte in Richtung der Schwenkachse formschlüssig aneinander fixiert ist.

Der Aufbau der ersten und zweiten Baueinheit mit jeweils einer Drehlagerhälfte ermöglicht auch hier einen gleichzeitigen Aufbau der ersten und zweiten Baueinheit.

Gemäß einer weiteren bevorzugten Ausführungsvariante weisen die Handgriffe Modulaufnahmen zur Aufnahme von Werkzeugmodulen auf. Die Modulaufnahmen sind dabei nach einer bevorzugten Weiterbildung auf einander zugewandten Innenseiten der Handgriffe angeformt. Die Werkzeugmodule sind dabei insbesondere als Abzieher oder Kabelschneideinheit ausgebildet.

Dadurch sind in einfacher Weise neben dem Abisolieren des Kabels weitere Bearbeitungsschritte wie insbesondere ein Abziehen der Isolierschicht des Kabels und ein Abtrennen eines Kabelabschnitts ermöglicht, ohne dass der Nutzer ein zusätzliches Werkzeug benutzen muss.

Nachfolgend werden bevorzugte Ausführungsbeispiele der Erfindung anhand der beiliegenden Zeichnungen näher erläutert. Es zeigen:
- Figuren 1 und 2: schematische isometrische Darstellungen einer ersten Ausführungsvariante eines erfindungsgemäßen Abisolierwerkzeugs mit geöffnetem Zangenmaul und zwischen Messerhalter der Klemm- und Schneideinheiten eingeführtem Kabel in unterschiedlichen Ausrichtungen der Klemm- und Schneideinheiten,
- Figur 3: eine isometrische Darstellung des Abisolierwerkzeugs gemäß Figur 1 bei geschlossenem Zangenmaul,
- Figur 4: eine Seitenansicht auf das Abisolierwerkzeug mit geschlossenem Zangenmaul,
- Figur 5: eine weitere isometrische Darstellung des Abisolierwerkzeugs gemäß Figur 1 mit geöffnetem Zangenmaul und aus Modulaufnahmen der Handgriffe entnommenen Werkzeugmodulen,
- Figur 6: eine isometrische Einzeldarstellung der Abisoliereinheit
- Figur 7: eine Draufsicht auf das Abisolierwerkzeug mit ausgeblendeter Abisoliereinheit bei geöffnetem Zangenmaul,
- Figur 8: eine Schnittdarstellung durch eine in Figur 7 mit C-C bezeichnete Schnittebene zur Darstellung der Verrastung der ersten und zweiten Baueinheit im Bereich der Drehlagerabschnitte,
- Figur 9: eine Explosionsdarstellung des Abisolierwerkzeugs,
- Figur 10: eine Seitenansicht auf die in Figur 6 gezeigte Abisoliereinheit,
- Figur 11: eine Schnittdarstellung durch die Abisoliereinheit in einer in Figur 10 mit A-A bezeichneten Schnittebene,
- Figuren 12 und 13: den Figuren 1 und 2 entsprechende schematische isometrische Darstellungen einer zweiten Ausführungsvariante eines erfindungsgemäßen Abisolierwerkzeugs,
- Figur 14: eine Seitenansicht auf das Abisolierwerkzeug gemäß Figur 12 mit geschlossenem Zangenmaul,
- Figur 15: eine isometrische Einzeldarstellung der Abisoliereinheit,
- Figur 16: eine Draufsicht auf das Abisolierwerkzeug gemäß Figur 12 mit ausgeblendeter Abisoliereinheit bei geöffnetem Zangenmaul,
- Figur 17: eine Schnittdarstellung durch eine in Figur 16 mit C-C bezeichnete Schnittebene zur Darstellung der Verrastung der ersten und zweiten Baueinheit im Bereich der Drehlagerabschnitte, und
- Figur 18: eine Explosionsdarstellung des Abisolierwerkzeugs gemäß Figur 12.

In der nachfolgenden Figurenbeschreibung beziehen sich Begriffe wie oben, unten, links, rechts, vorne, hinten usw. ausschließlich auf die in den jeweiligen Figuren gewählte beispielhafte Darstellung und Position des Abisolierwerkzeugs, der Baueinheit, der Handgriffe, Abisoliereinheit, Klemmbacke, Klemmund Schneideinheit und dergleichen. Diese Begriffe sind nicht einschränkend zu verstehen, d.h., durch verschiedene Arbeitsstellungen oder die spiegelsymmetrische Auslegung oder dergleichen können sich diese Bezüge ändern.

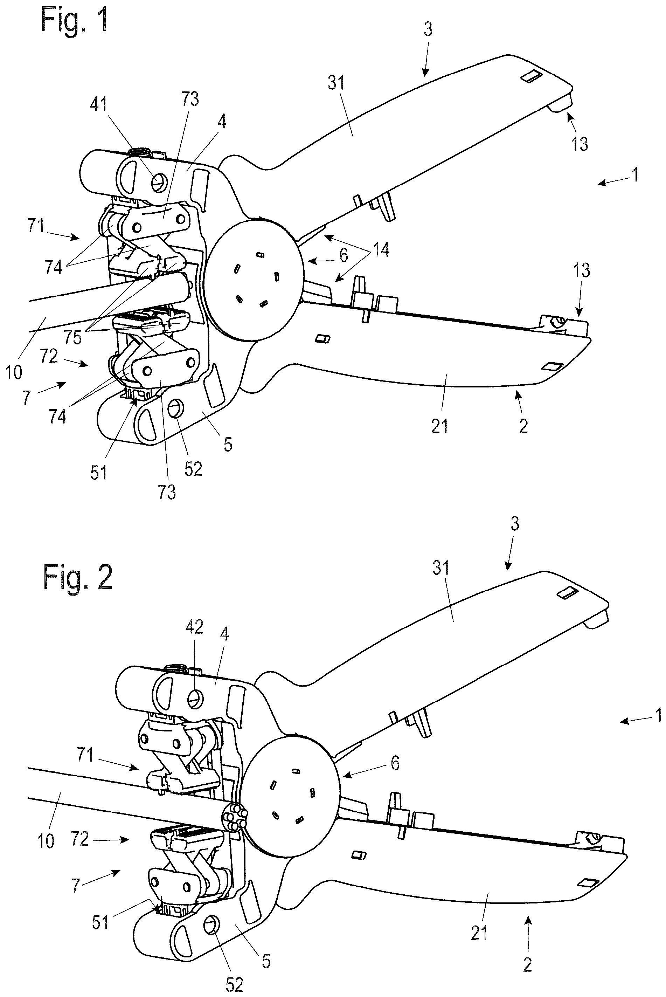

In den Figuren 1 bis 5 ist mit dem Bezugszeichen 1 insgesamt eine erste Ausführungsvariante eines handbetätigbaren Abisolierwerkzeugs bezeichnet. Das Abisolierwerkzeug 1 dient dabei insbesondere der Verarbeitung von Kabeln.

Das Abisolierwerkzeug 1 weist eine erste Baueinheit 11 und eine erste Baueinheit 12 auf.

Die erste Baueinheit 11 umfasst einen ersten Handgriff 2 und eine sich von diesem erstreckende erste Klemmbacke 4. Die zweite Baueinheit 12 umfasst einen relativ zu dem ersten Handgriff 2 abspreizbar um eine Schwenkachse AP schwenkbar bewegbaren zweiten Handgriff 3 sowie eine sich von diesem erstreckende zweite Klemmbacke 5 auf.

Zwischen der Klemmbacke 4, 5 und dem Handgriff 2, 3 der ersten und zweiten Baueinheit 11, 12 sind jeweils Drehlagerabschnitte 6a, 6b eines Drehlagers 6 angeformt. Die Drehlagerabschnitte 6a, 6b sind um die Schwenkachse AP schwenkbar miteinander verrastet.

Zwischen den Klemmbacken 4, 5 ist eine als dritte Baueinheit ausgebildete Abisoliereinheit 7 angeordnet. Die Abisoliereinheit 7 umfasst zwei Klemm- und Schneideinheiten 71, 72 sowie in Aufnahmen 41, 51 der jeweiligen Klemmbacke 4, 5 lösbar festlegbaren Kopfteile 77. Dabei sind die beiden Klemm- und Schneideinheiten 71, 72 über wenigstens einen Führungsbolzen 78 fest miteinander verbunden.

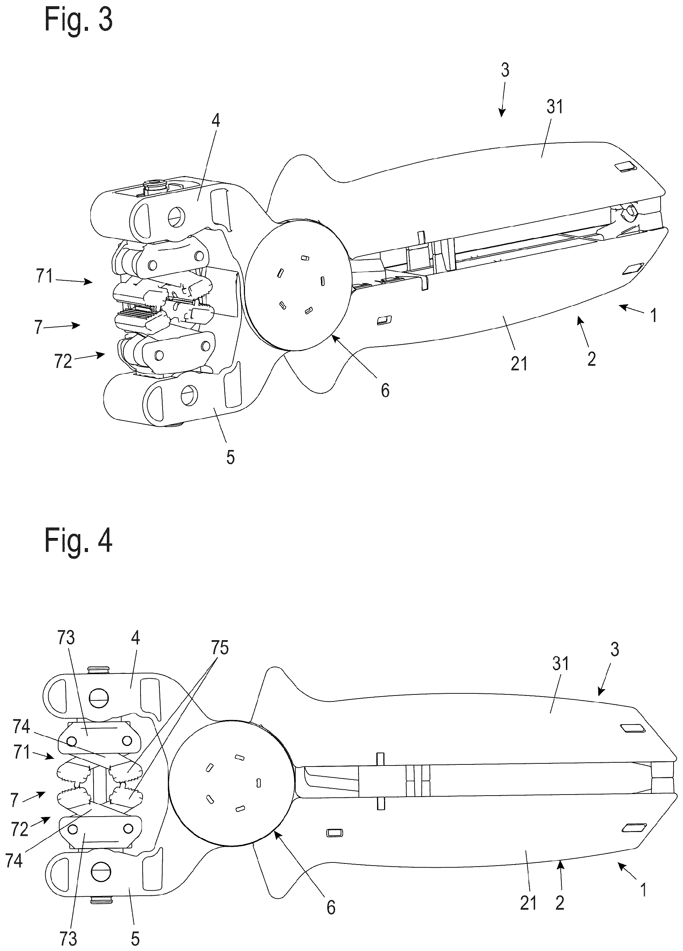

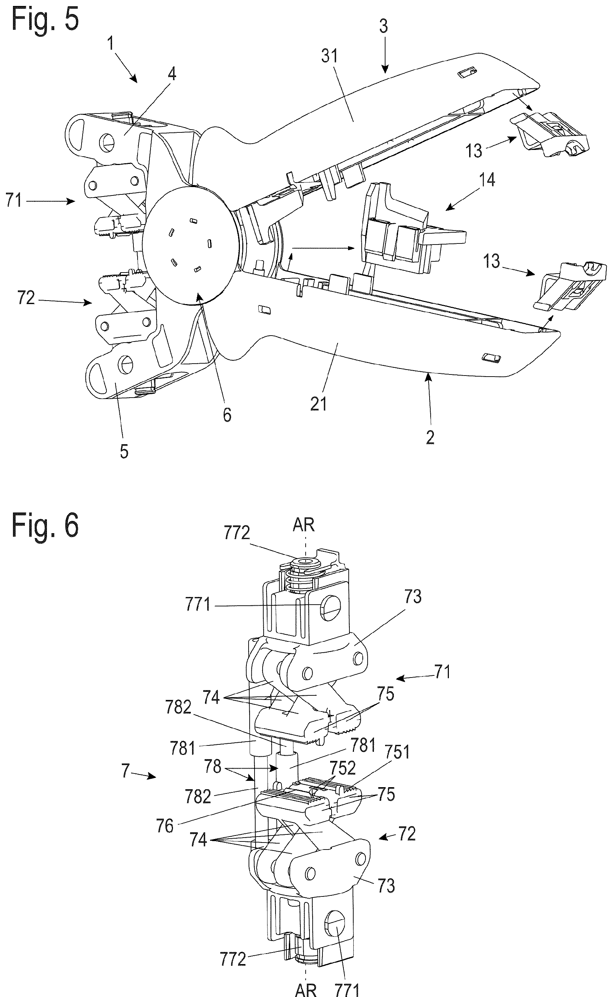

Eine erste Ausführungsvariante der Abisoliereinheit 7 ist in Einzeldarstellung in Figur 6 gezeigt. Wie in dieser Figur 6 und in den Figuren 1 und 2 gezeigt ist, ist jede der Klemm- und Schneideinheiten 71, 72 der Abisoliereinheit 7 relativ zum jeweiligen Kopfteil 77 um eine parallel zu dem wenigstens einen Führungsbolzen 78 ausgerichtete Drehachse AR (auch gezeigt in Figur 4) verdrehbar.

Die Kopfteile 77 sind dabei mittels Steckstücken 771 in Öffnungen 42, 52 von die Aufnahmen 41, 51 begrenzenden Seitenwänden der jeweiligen Klemmbacke 4, 5 lösbar fixiert.

Die Steckstücke 771 sind bei der in den Figuren 1 bis 6 gezeigten Ausführungsvariante des Abisolierwerkzeugs 1 als seitlich von den Seitenwänden der Kopfteile 77 vorstehende Erhebungen ausgebildet, wobei die Seitenwände der Kopfteile 77 beim Einführen in die Aufnahmen 41, 51 der Klemmbacke 4, 5 elastisch nach innen federn können.

Wie weiter in den Figuren 6, 9 und 10 gezeigt ist, weist jede der Schneid- und Klemmeinheiten 71, 72 ein am Kopfteil 77 um die Drehachse AR verdrehbar ausgebildetes Aufnahmegehäuse 73 auf, an dem wenigstens ein Messerhalter 75 gehalten ist.

Das Aufnahmegehäuse 73 ist dabei bevorzugt als Scherensitz mit zwei Schwenkachsen 731 ausgebildet, an denen Gestänge 74 schwenkbar gehalten sind. An den Enden der Gestänge 74 sind die Messerhalter 75 angeordnet.

Bei der hier gezeigten Ausführungsvariante sind die Messerhalter 75 an den Gestängen 74 angeformt.

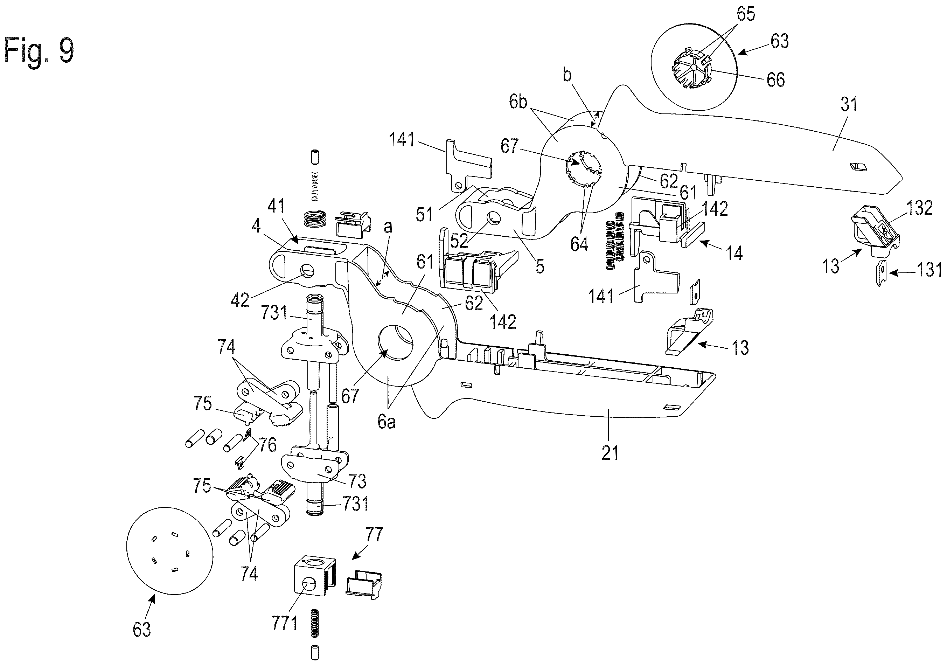

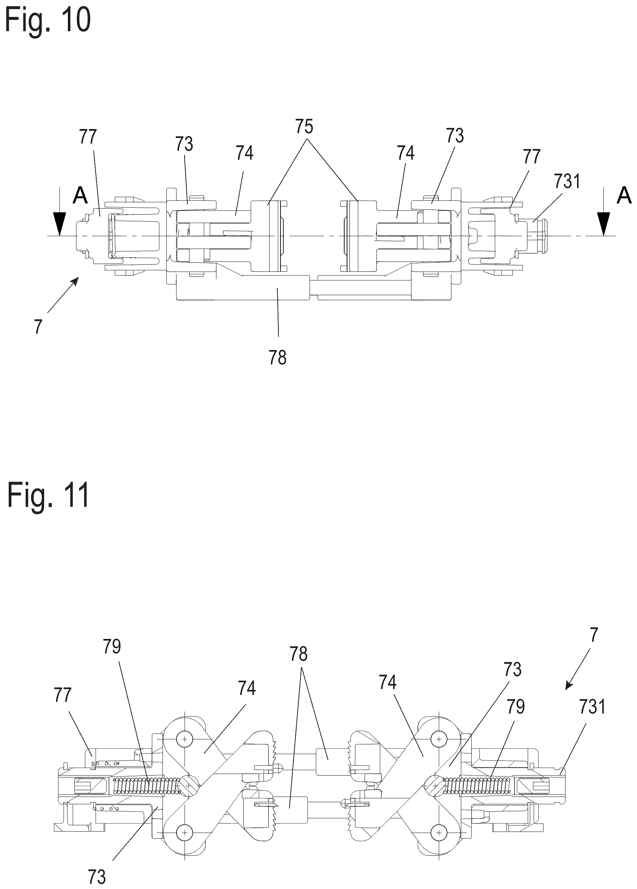

Wie insbesondere in den Figuren 9 und 11 gezeigt ist, liegt an einer den Messerhaltern 75 abgewandten Seite des Gestänges 74 ein Druckfederelement 79 an, das der Vorspannung der Messerhalter 75 in eine maximal ausgefahrene Stellung dient.

Jede der Messerhalter 75 weist eine Klemmfläche 751 und eine Aufnahmenut 752 zur Aufnahme eines Messers 76 auf.

Wie weiter in den Figuren 6 und 9 gezeigt ist, sind die die beiden Klemm- und Schneideinheiten 71, 72 miteinander verbindenden Führungsbolzen 78 bevorzugt als Hubsäule ausgebildet, mit in einem Zylinder 781 vertikal verschiebbaren Bolzen 782.

Denkbar ist es auch, nur einen solchen Führungsbolzen 78 zur Verbindung der beiden Führungsbolzen 78 vorzusehen.

Mittels des am Aufnahmegehäuse 73 angeformten Drehzylinders 772 lassen sich die beiden Klemm- und Schneideinheiten 71, 72 relativ zu den Klemmbacken 4, 5 um die Drehachse AR in einfacher Weise drehen, so dass bei Benutzung des Abisolierwerkzeugs 1 sowohl stirnseitig zwischen die Klemm- und Schneideinheiten 71, 72 eingeführte Kabel 10 als auch von der Seite her eingeführte Kabel 10 in einfacher Weise gegriffen und abisoliert werden können, wie es in den Figuren 1 und 2 beispielhaft dargestellt ist.

Die Drehlagerabschnitte 6a, 6b der in den Figuren 1 bis 11 gezeigten Ausführungsvariante des Abisolierwerkzeugs 1 weisen parallel zueinander ausgerichtete voneinander beabstandete Lagerbacken 61, 62 auf.

Die Lagerbacken 61, 62 des einen der Drehlagerabschnitte 6a, 6b, im gezeigten Ausführungsbeispiel die Lagerbacken 61 des Drehlagerabschnitts 6a, sind weiter voneinander beabstandet als die Lagerbacken 61, 62 des anderen der Drehlagerabschnitte 6a, 6b, im gezeigten Ausführungsbeispiel der Lagerbacken 62 des Drehlagerabschnitts 6b.

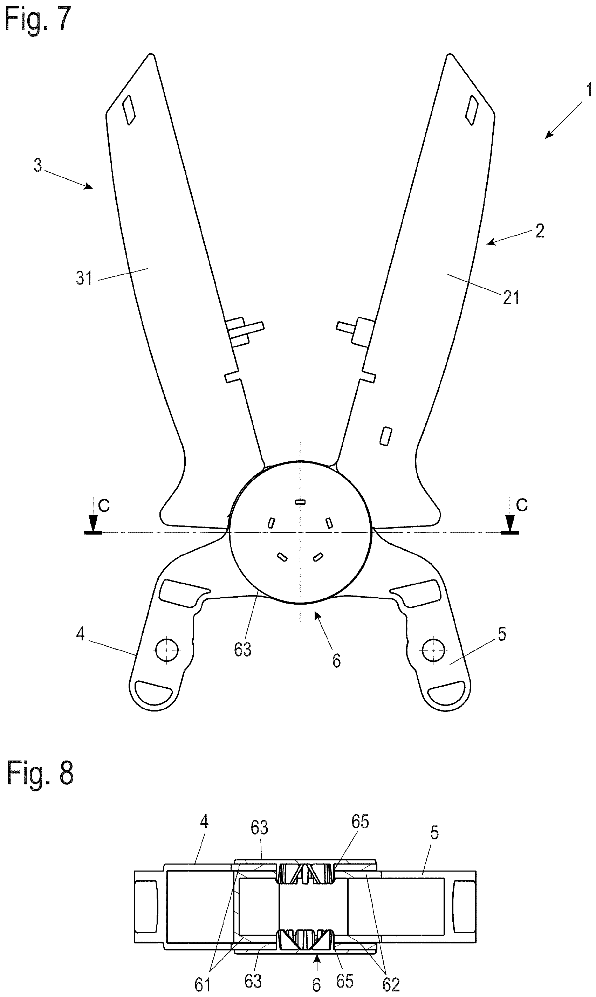

Die Lagerbacken 61 des Drehlagerabschnitts 6a umgreifen hier die Lagerbacken 62 des Drehlagerabschnitts 6b entsprechend, wie es in Figur 8 gut zu erkennen ist.

Zur Fixierung der Drehlagerabschnitte 6a, 6b aneinander sind jeweilige aneinander liegende Lagerbacken 61, 62 mittels eines jeweiligen Rastdeckels 63 um die Schwenkachse AP drehbar, aber in Richtung der Schwenkachse AP verrastet.

Wie beispielhaft in Figur 8 und 9 gezeigt ist, liegen die Rastdeckel 63 an den äußeren Lagerbacken 61 an und weisen axial in Richtung der Schwenkachse AP vorstehende Raststege 65 auf, die einen Rand einer jeweiligen kreisförmigen Ausnehmung 67 des inneren Lagerbackens 62 hintergreifen.

Die Raststege 65 sind dazu mit Hintergriffen 66 ausgebildet.

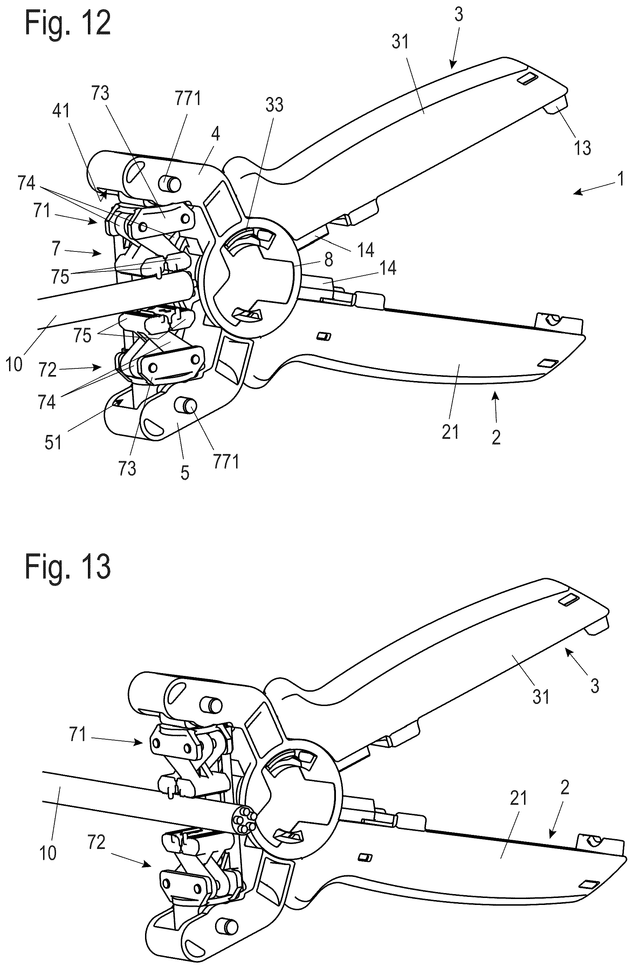

In den Figuren 12 bis 18 ist eine alternative Ausführungsvariante eines Abisolierwerkzeugs 1 gezeigt. Die wesentlichen Unterschiede zu der in den Figuren 1 bis 11 gezeigten Ausführungsvariante sind dabei zum einen die Ausbildung des Drehlagers 8 sowie die Ausbildung der Kopfteile 77 der Abisoliereinheit 7.

Durch die alternative Ausführung des Drehlagers 8 ist es bei dieser Ausführungsvariante des Abisolierwerkzeugs 1 ermöglicht, dass die erste Baueinheit 11 und die zweite Baueinheit 12 baugleich ausgebildet sind.

Betreffend das Drehlager 8 ist wie in den Figuren 12 und 16 bis 18 gezeigt ist, an jedem der Drehlagerabschnitte 8a, 8b wenigstens ein Raststeg 81 und wenigstens eine Raststegaufnahme 82 angeformt.

Im zusammengesetzten Zustand der Drehlagerabschnitte 8a, 8b sind der wenigstens eine Raststeg 81 des einen der Drehlagerabschnitte 8a, 8b mit der wenigstens einen Raststegaufnahme 82 der anderen der Drehlagerabschnitte 8a, 8b in Richtung der Schwenkachse AP formschlüssig aneinander fixiert.

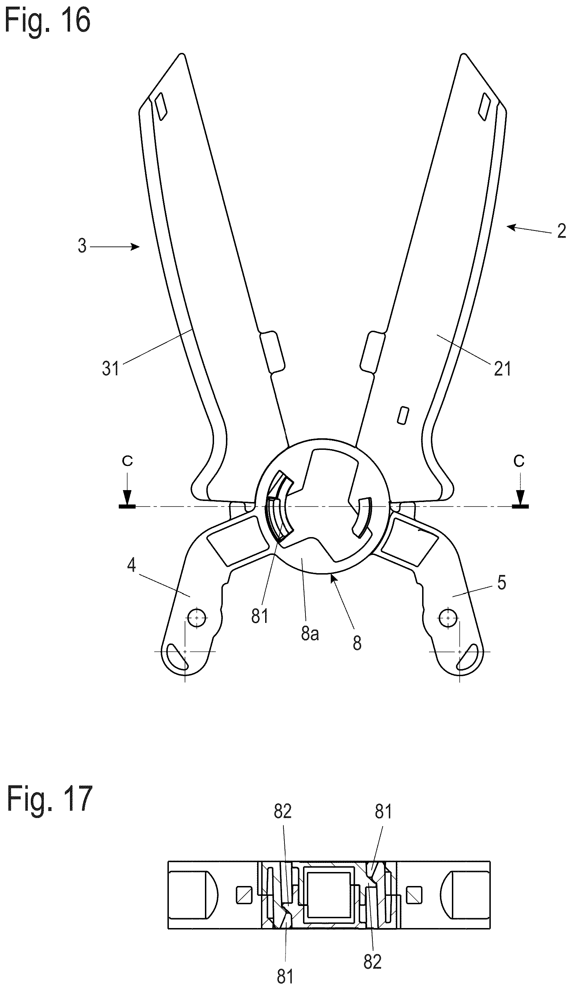

Zur Montage der beiden Baueinheiten 11, 12 aneinander müssen diese entsprechend in Richtung der Schwenkachse AP zusammengedrückt werden, um so die Raststege 81 in die jeweilige Raststegaufnahme 82 einzudrücken, wie es in den Figuren 16 und 17 dargestellt ist.

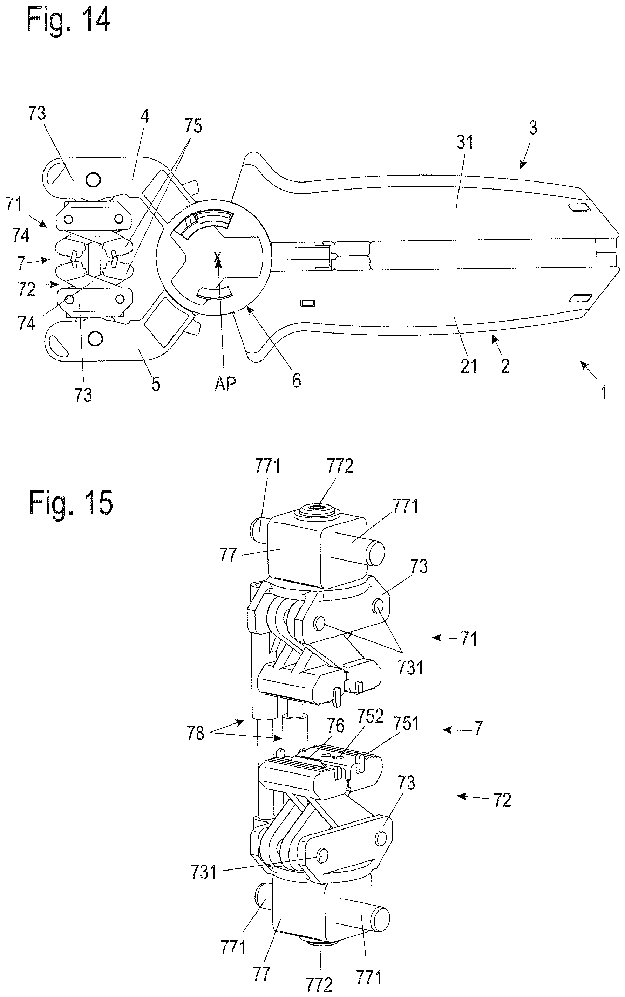

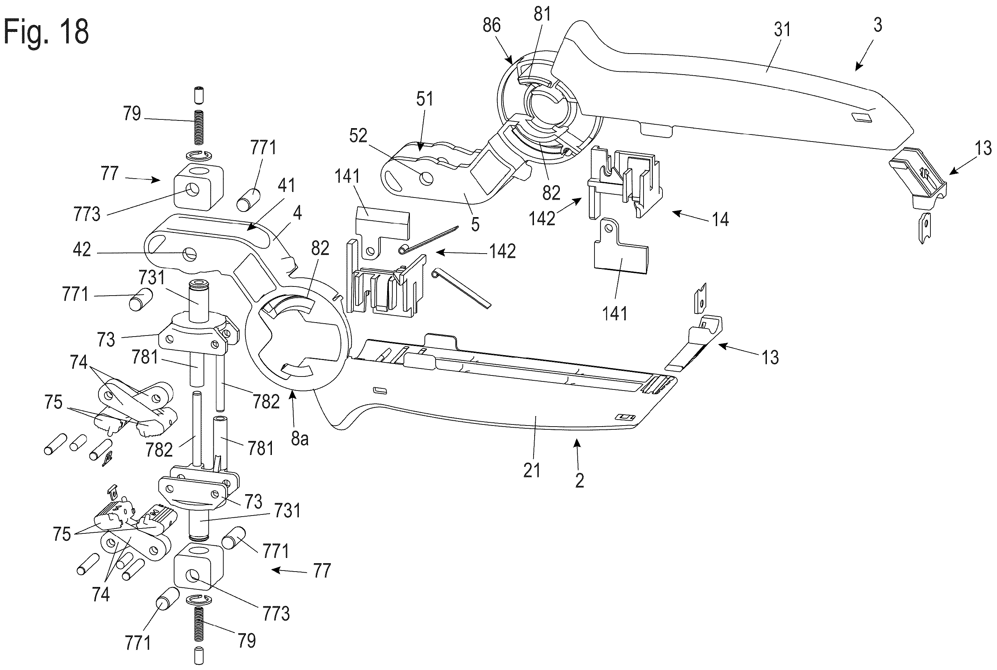

Betreffend die Kopfteile 77 der Abisoliereinheit 7 sind bei dieser Ausführungsvariante, wie es in den Figuren 15 und 18 gezeigt ist, die Steckstücke 771 als Bolzen ausgebildet, die durch die Öffnungen 42, 52 in den Klemmbacken 4, 5 und Bohrung 773 im Kopfteil 77 eingesteckt sind.

Wie weiter den Figuren 1, 9, 12 und 18 zu entnehmen ist, weisen beide Ausführungsvarianten des Abisolierwerkzeugs Handgriffe 2, 3 mit Modulaufnahmen 22, 32 zur Aufnahme von Werkzeugmodulen 13, 14 auf.

Die Modulaufnahmen 22, 32 sind dabei auf einander zugewandten Innenseiten der Handgriffe 2, 3 angeformt.

Die Werkzeugmodule 13, 14 sind dabei beispielhaft als Abzieher oder Kabelschneideinheit ausgebildet.

### Bezugszeichenliste

- 1: Abisolierwerkzeug

- 2: erster Handgriff
- 21: Griffschale
- 22: Modulaufnahme

- 3: zweiter Handgriff
- 31: Griffschale
- 32: Modulaufnahme

- 4: erste Klemmbacke
- 41: Aufnahme
- 42: Öffnung

- 5: zweite Klemmbacke
- 51: Aufnahme
- 52: Öffnung

- 6: Drehlager
- 6a, b: Drehlagerabschnitt
- 61: Lagerbacke
- 62: Lagerbacke
- 63: Rastdeckel
- 64: Raststeg
- 65: Raststeg
- 66: Hintergriff
- 67: Ausnehmung

- 7: Abisoliereinheit
- 71: Klemm- und Schneideinheit
- 72: Klemm- und Schneideinheit
- 73: Aufnahmegehäuse
- 731: Schwenkachse
- 74: Gestänge
- 75: Messerhalter
- 751: Klemmfläche
- 752: Aufnahmenut
- 76: Messer
- 77: Kopfteil
- 771: Steckstück
- 772: Drehzylinder
- 773: Bohrung
- 78: Führungsbolzen
- 781: Zylinder
- 782: Bolzen
- 79: Federelement

- 8: Drehlager
- 8a, b: Drehlagerabschnitt
- 81: Raststeg
- 82: Raststegaufnahme

- 10: Kabel
- 11: erste Baueinheit
- 12: zweite Baueinheit

- 13: Abzieher
- 131: Messer
- 132: Messerhalter

- 14: Kabelabschneider
- 141: Messer
- 142: Messerhalter

- AP: Schwenkachse
- AR: Drehachse

## Patentansprüche

1. Handbetätigbares Abisolierwerkzeug (1), insbesondere zur Verarbeitung von Kabeln, aufweisend:
- eine erste Baueinheit (11), umfassend einen ersten Handgriff (2) und eine sich von diesem erstreckende erste Klemmbacke (4),
- eine zweite Baueinheit (12), umfassend einen relativ zu dem ersten Handgriff (2) abspreizbar um eine Schwenkachse (AP) schwenkbar bewegbaren zweiten Handgriff (3) und eine sich von diesem erstreckende zweite Klemmbacke (5),
- eine zwischen den Klemmbacken (4, 5) angeordnete Abisoliereinheit (7), umfassend zwei Klemm- und Schneideinheiten (71, 72) und in Aufnahmen (41, 51) der jeweiligen Klemmbacke (4, 5) lösbar festlegbare Kopfteile (77),
**dadurch gekennzeichnet, dass**
- zwischen der Klemmbacke (4, 5) und dem Handgriff (2, 3) der ersten und zweiten Baueinheit (11, 12) jeweils Drehlagerabschnitte (6a, 6b, 8a, 8b) eines Drehlagers (6, 8) angeformt sind, wobei die Drehlagerabschnitte 6a, 6b, 8a, 8b) um die Schwenkachse (AP) schwenkbar miteinander verrastet sind,
- und die Abisoliereinheit (7) als dritte Baueinheit ausgebildet ist, wobei die Klemm- und Schneideinheiten (71, 72) der Abisoliereinheit (7) über wenigstens einen Führungsbolzen (78) fest miteinander verbunden sind.

2. Handbetätigbares Abisolierwerkzeug (1) nach Anspruch 1, **dadurch gekennzeichnet, dass** jede der Klemm- und Schneideinheiten (71, 72) relativ zum jeweiligen Kopfteil (77) um eine parallel zu dem wenigstens einen Führungsbolzen (78) ausgerichtete Drehachse (AR) verdrehbar ist.

3. Handbetätigbares Abisolierwerkzeug (1) nach Anspruch 1 oder 2, **dadurch gekennzeichnet, dass** in die Aufnahmen (41, 51) begrenzenden Seitenwänden der jeweiligen Klemmbacke (4, 5) Öffnungen (42, 52) zur Aufnahme von am Kopfteil (77) vorgesehenen Steckstücken (771) vorgesehen sind, zur lösbaren Fixierung des jeweiligen Kopfteils (77) in der jeweiligen Klemmbacke (4, 5).

4. Handbetätigbares Abisolierwerkzeug (1) nach Anspruch 2 oder 3, **dadurch gekennzeichnet, dass** jede der Schneid- und Klemmeinheiten (71, 72) ein am Kopfteil (77) um die Drehachse (AR) verdrehbar ausgebildetes Aufnahmegehäuse (73) aufweist, an dem wenigstens ein Messerhalter (75) gehalten ist.

5. Handbetätigbares Abisolierwerkzeug (1) nach Anspruch 4, **dadurch gekennzeichnet, dass** das Aufnahmegehäuse (73) als Scherensitz mit zwei Schwenkachsen (731) ausgebildet ist, an denen Gestänge (74) schwenkbar gehalten sind, an deren Enden zwei Messerhalter (75) angeordnet, insbesondere angeformt sind.

6. Handbetätigbares Abisolierwerkzeug (1) nach Anspruch 5, **dadurch gekennzeichnet, dass** an einer den Messerhaltern (75) abgewandten Seite des Gestänges (74) ein Druckfederelement (79) anliegt, zur Vorspannung der Messerhalter (75) in eine maximal ausgefahrene Stellung.

7. Handbetätigbares Abisolierwerkzeug (1) nach einem der Ansprüche 4 bis 6, **dadurch gekennzeichnet, dass** jeder der Messerhalter (75) eine Klemmfläche (751) und eine Aufnahmenut (752) zur Aufnahme eines Messers (76) aufweist.

8. Handbetätigbares Abisolierwerkzeug (1) nach einem der vorstehenden Ansprüche, **dadurch gekennzeichnet, dass** der wenigstens eine Führungsbolzen (78) als Hubsäule ausgebildet ist.

9. Handbetätigbares Abisolierwerkzeug (1) nach einem der vorstehenden Ansprüche, **dadurch gekennzeichnet, dass** die Drehlagerabschnitte (6a, 6b) parallel zueinander ausgerichtete voneinander beabstandete Lagerbacken (61, 62) aufweisen, wobei die Lagerbacken (61, 62) des einen der Drehlagerabschnitte (6a, 6b) weiter voneinander beabstandet sind als die Lagerbacken (61, 62) des anderen der Drehlagerabschnitte (6a, 6b) und wobei die Lagerbacken (61, 62) des einen der Drehlagerabschnitte (6a, 6b) die Lagerbacken (61, 62) des anderen der Drehlagerabschnitte (6a, 6b) umgreifen.

10. Handbetätigbares Abisolierwerkzeug (1) nach Anspruch 9, **dadurch gekennzeichnet, dass** jeweilige aneinander liegende Lagerbacken (61, 62) mittels eines jeweilige Rastdeckels (63) um die Schwenkachse (AP) drehbar, aber in Richtung der Schwenkachse (AP) verrastet sind.

11. Handbetätigbares Abisolierwerkzeug (1) nach Anspruch 10, **dadurch gekennzeichnet, dass** die Rastdeckel (63) an den äußeren Lagerbacken (61) anliegen und axial in Richtung der Schwenkachse (AP) vorstehende Rasthaken (65) aufweisen, die einen Rand einer jeweiligen kreisförmigen Ausnehmung (67) des inneren Lagerbackens (62) hintergreifen.

12. Handbetätigbares Abisolierwerkzeug (1) nach einem der Ansprüche 1 bis 8, **dadurch gekennzeichnet, dass** die erste Baueinheit (11) und die zweite Baueinheit (12) baugleich ausgebildet sind.

13. Handbetätigbares Abisolierwerkzeug (1) nach Anspruch 12, **dadurch gekennzeichnet, dass** an jeden der Drehlagerabschnitte (8a, 8b) wenigstens ein Raststeg (81) und wenigstens eine Raststegaufnahme (82) angeformt ist, wobei im zusammengesetzten Zustand der Drehlagerabschnitte (8a, 8b) der wenigstens eine Raststeg (81) der einen der Drehlagerabschnitte (8a, 8b) mit der wenigstens einen Raststegaufnahme (82) der anderen der Drehlagerabschnitte (8a, 8b) in Richtung der Schwenkachse (AP) formschlüssig aneinander fixiert sind.

14. Handbetätigbares Abisolierwerkzeug (1) nach einem der vorstehenden Ansprüche, **dadurch gekennzeichnet, dass** die Handgriffe (2, 3) Modulaufnahmen (22, 32) zur Aufnahme von Werkzeugmodulen (13, 14) aufweisen.

15. Handbetätigbares Abisolierwerkzeug (1) nach Anspruch 11, **dadurch gekennzeichnet, dass** die Modulaufnahmen (22, 32) auf einander zugewandten Innenseiten der Handgriffe (2, 3) angeformt sind.

16. Handbetätigbares Abisolierwerkzeug (1) nach Anspruch 11 oder 12, **dadurch gekennzeichnet, dass** die Werkzeugmodule (13, 14) als Abzieher oder Kabelschneideinheit ausgebildet sind.
